# EUROPEAN PATENT APPLICATION

(11) **EP 3 901 434 A1**
(43) Date of publication of application: **27.10.2021**
(21) Application number: 21175102.9
(22) Date of filing: 21.04.2017
(51) Int. Cl.: F01N 3/28, F01N 3/20, B01F 3/04, B01F 5/00, B01F 5/04, B01F 5/06

(54) **SYSTEM FOR MIXING A LIQUID SPRAY INTO A GASEOUS FLOW AND EXHAUST AFTERTREATMENT DEVICE COMPRISING SAME**

(62) Divisional of application: 17167614.1
(71) Applicant: Donaldson Company, Inc., Minneapolis, MN 55440-1299 (US)
(72) Inventor: DE RUDDER, Korneel, 3020 Winksele (BE); SCHELLENS, Bart, 3090 Overijse (BE); CHAUVIN, Corine, 14000 Caen (FR); SILVA, Francisco Jose Cardoso, 3300 Tienen (BE)
(74) Representative: IPLodge bv

(57) **Abstract**

The present invention pertains to a system for mixing a spray into a gaseous flow, comprising: a main body (100) defining an interior (101) extending from a first end (110) to a second end (120), having an inlet opening (140) and an outlet (150); a reaction zone (160) between the inlet opening (140) and the outlet (150), spaced from the first end (110) to define a mixing region (200); a restrictor arrangement (170) between the first end (110) and the reaction zone (160), separating the mixing region (200) into two chambers (210, 220) and defining a restricted passageway between the two chambers (210, 220). The first chamber (210) comprises: a dosing arrangement (180) to receive an injector to mix reactant with the gas in the first chamber (210); a first swirl promoting means (310) between the inlet opening (140) and the dosing arrangement (180); and a second swirl promoting means (320) between the dosing arrangement (180) and the restrictor arrangement (170), wherein said dosing arrangement (180) is adapted for receiving an injector such that an injection axis of said injector is directed to the first swirl promoting means (310).

## Description

### Field of the Invention

The present invention pertains to the field of systems for mixing a liquid spray into a gaseous flow, in particular systems for mixing a spray of urea solution into an exhaust flow of an internal combustion engine for the purpose of selective catalytic reduction (SCR) of NOₓ residues.

### Background

Vehicles equipped with diesel engines typically include exhaust systems that have aftertreatment components such as selective catalytic reduction catalyst devices, lean NOₓ catalyst devices, or lean NOₓ trap devices to reduce the amount of undesirable gases, such as nitrogen oxides (NOₓ) in the exhaust. In order for these types of aftertreatment devices to work properly, a doser injects reactants, such as urea, ammonia, or hydrocarbons, into the exhaust gas. As the exhaust gas and reactants flow through the aftertreatment device, the exhaust gas and reactants convert the undesirable gases, such as NOₓ, into more acceptable gases, such as nitrogen, oxygen, or carbon dioxide, or into water. However, the efficiency of the aftertreatment system depends upon how evenly the reactants are mixed with the exhaust gases.

International patent application publication no. WO 2015/130789 A1 in the name of Donaldson Company, Inc., discloses an aftertreatment arrangement for treating exhaust including a main body defining an interior, an inlet opening, and an outlet; an inlet arrangement disposed at the inlet opening; an aftertreatment substrate disposed between the inlet opening and the outlet; a restrictor arrangement disposed between a first closed end of the main body interior and the aftertreatment substrate; and a dosing arrangement configured to inject reactant into the exhaust. In an example disclosed in WO 2015/130789 A1, a baffle plate defines a solid region aligned with the restricted passageway and defines openings at locations radially offset from the restricted passageway. In some particular examples, the baffle plate defines a plurality of scoops, pipes, louvers, or other direction adjusting members that facilitate swirling or other mixing movements of the exhaust.

There is still a need for exhaust treatment devices that are compact and that provide more efficient and effective mixing of reactants.

### Summary

According to an aspect of the present invention, there is provided a system for mixing a liquid spray into a gaseous flow, the system comprising: a main body defining an interior, the main body interior extending from a first end to a second end, the main body defining a circumferential wall extending between the first end and the second end, the circumferential wall or the first end defining an inlet opening, the main body also defining an outlet; an inlet arrangement disposed at the inlet opening, the inlet arrangement defining an inlet channel leading to the interior of the main body; a reaction zone disposed within the interior of the main body between the inlet opening and the outlet, the reaction zone being spaced from the first end to define a mixing region within the main body interior; a restrictor arrangement disposed within the interior of the main body between the first end and the reaction zone, the restrictor arrangement separating the mixing region into a first chamber and a second chamber, the restrictor arrangement defining a restricted passageway between the first and second chambers; wherein the first chamber comprises: a dosing arrangement configured to receive an injector to spray reactant into the gaseous flow so that the reactant mixes with the gaseous flow in the first chamber; a first swirl promoting means arranged between the inlet opening and the dosing arrangement; and a second swirl promoting means arranged between the dosing arrangement and the restrictor arrangement, such that a gaseous flow passing through said second swirl promoting means is swirled around before entering the restricted passageway and passing to the second chamber.

The inventors have found that the combination of a first swirl promoting means and a second swirl promoting means, arranged on respective sides of the dosing arrangement upstream of a restrictor arrangement, produces a surprisingly thorough mixing of the gaseous flow and the injected spray, which in turn improves the reaction between the gas and the sprayed substance in the reaction zone.

It should be noted that the while the first swirl promoting means is said to be arranged between the inlet opening and the dosing arrangement, its shape may axially extend from a point upstream of the dosing arrangement (as referenced to the direction of the gaseous flow), to a point directly beneath or even somewhat downstream of the dosing arrangement, the essence being that it is arranged so as to produce a swirling motion in the gaseous flow at or prior to the point at which said gaseous flow first receives the liquid spray.

The inventors have found that by arranging the system in this way, the mixing occurs in several stages, which improves the overall quality of the mixing to a surprising degree. The first swirl promoting means, arranged upstream of the dosing arrangement, ensures that the gaseous flow has taken on a turbulent, swirling motion by the time it reaches the zone where it receives the spray. As a result, the droplets being sprayed into the gaseous flow are carried along in the direction of the swirl, rather than simply hitting the opposite inner wall of the main body interior where crystalline deposits might otherwise form. The second swirl further forces the spray droplets radially outwards by means of the centrifugal force. This radially outward motion is followed by a forced inward motion imposed by the restrictor arrangement, thus creating another source of turbulence and mixing.

In an embodiment of the system according to the present invention, the first swirl promoting means and the second swirl promoting means are arranged to promote swirling in a first angular direction and a second angular direction respectively, said first angular direction and said second angular direction being mutually opposed.

In this embodiment, the second swirl promoting means forces the swirl to reverse its direction, thus imposing creating another source of turbulence and mixing. In addition, it forces the spray droplets radially outwards by means of the centrifugal force. This radially outward motion is followed by a forced inward motion imposed by the restrictor arrangement, also creating another source of turbulence and mixing.

In an embodiment of the system according to the present invention, the main body interior extends along a longitudinal axis from the first end to the second end, the dosing arrangement being configured so that an injection axis of any injector mounted to the dosing arrangement is not coaxial with the longitudinal axis of the main body.

It is an advantage of this embodiment that upon entry in the main body interior, the injected spray encounters a gaseous flow that is not purely tangential, thus improving the mixing of the spray with the gaseous flow.

In an embodiment of the system according to the present invention, the main body is divided into a first main part and a second main part; the first main part comprising the first swirl promoting means and the dosing arrangement; the second main part comprising the second swirl promoting means and the restrictor arrangement; wherein the longitudinal axis of the second main part is arranged at an angle relative to the longitudinal axis of the first main part.

It is an advantage of this embodiment that the mixing of the spray with the gaseous flow is further improved by imposing a change of direction on the gaseous flow after the spray has been added.

In a particular embodiment, the dosing arrangement is configured so that an injection axis of any injector mounted to the dosing arrangement is substantially parallel to the longitudinal axis of the second main part.

It is an advantage of this particular embodiment that the centrifugal spreading of the spray droplets in the gaseous flow prior to passing through the restrictor arrangement is improved.

In an embodiment of the system according to the present invention, the inlet arrangement is configured to orient the inlet channel at an angle to the main body to promote swirling of the gaseous flow.

It is an advantage of this embodiment that a degree of swirling can be introduced even before the gaseous flow passes through the first swirl promoting means, especially if the axis of the inlet channel is offset relative to the axis of the main body.

In an embodiment of the system according to the present invention, the first swirl promoting means and/or the second swirl promoting means comprises a baffle plate defining a plurality of scoops, pipes, louvers, or other direction adjusting members.

It is an advantage of this embodiment that it presents a very compact way to introduce a substantial degree of swirling in the gaseous flow.

In a particular embodiment, a combined open area of the plurality of openings defined by the baffle plate is at least as large as a transverse area of the restricted passageway.

It is an advantage of this particular embodiment that it reduces the overall pressure drop of the system, by presenting similarly sized passage openings at the various stages of the mixing zone.

In an embodiment of the system according to the present invention, the first swirl promoting means and/or the second swirl promoting means comprises a tube defining a plurality of scoops, louvers or other direction adjusting members.

It is an advantage of this embodiment that the spray of droplets issuing from an adequately positioned and oriented injector may be further scattered into the gaseous flow by colliding with the direction adjusting members of the tube.

In an embodiment, the system according to the present invention further comprises a spray protector system.

It is an advantage of this embodiment that it protects the spray from hitting fixed and potentially cooler parts of the system, which would otherwise be a likely initiation point for the formation of undesirable solid deposits.

In an embodiment, the system according to the present invention further comprises one or more sheet metal surfaces arranged in the first chamber so as to be substantially surrounded by a gaseous flow entering through said inlet opening, and the dosing arrangement is configured so that an injection axis of any injector mounted to the dosing arrangement intersects said one or more sheet metal surfaces.

It is an advantage of this embodiment that it protects the spray from hitting fixed and potentially cooler parts of the system, such as the inner wall of the main body, which would otherwise be a likely initiation point for the formation of undesirable solid deposits. As the one or more sheet metal surfaces receive heat from the gaseous flow that surrounds them, deposit formation can be avoided. Instead, the spray droplets that hit the one or more sheet metal surfaces scatter and get carried along with the gaseous flow.

According to an aspect of the present invention, there is provided an exhaust treatment device for treating exhaust comprising the system for mixing a liquid spray into a gaseous flow as described above, wherein an aftertreatment substrate is disposed in said reaction zone, and wherein said inlet arrangement is adapted to receive an exhaust flow of an internal combustion engine.

The system of the present invention is particularly suitable for use as an exhaust treatment device for treating exhaust gases from an internal combustion engine. In particular, the reaction zone may comprise an aftertreatment substrate (e.g. a Diesel particle filter, Selective Catalytic Reduction on Filter, or regular Selective Catalytic Reduction substrate). The liquid spray may consist of a urea solution (e.g. a eutectic urea/water solution, such as the ones commercially available under the names AdBlue and DEF) .

According to an aspect of the present invention, there is provided a motor vehicle comprising the exhaust treatment device as described above.

According to an aspect of the present invention, there is provided a diesel-powered machine comprising the exhaust treatment device as described above.

### Brief Description of the Figures

These and other features and advantages of embodiments of the present invention will be described in more detail with reference to the attached drawings, in which:
- Figure 1 presents a cross section of a system for mixing a liquid spray into a gaseous flow according to a first embodiment of the present invention;
- Figure 2a presents a cross section of a system for mixing a liquid spray into a gaseous flow according to a second embodiment of the present invention;
- Figure 2b illustrates first swirl promoting means as may be used in the embodiment shown in Figure 2a;
- Figure 3 presents a cross section of a system for mixing a liquid spray into a gaseous flow according to a third embodiment of the present invention;
- Figure 4 presents a cross section of a system for mixing a liquid spray into a gaseous flow provided with metal surfaces arranged in a plane intersecting the injection axis, as may be used in embodiments of the present invention;
- Figure 5 presents a cross section of a system for mixing a liquid spray into a gaseous flow provided with an injector having an injection axis intersecting with the first swirl promoting means, as may be used in embodiments of the present invention;
- Figure 6a presents a cross section of a system for mixing a liquid spray into a gaseous flow according to a fourth embodiment of the present invention;
- Figure 6b illustrates first swirl promoting means as may be used in the embodiment shown in Figure 6a;
- Figure 7a presents a cross section of a system for mixing a liquid spray into a gaseous flow according to a fifth embodiment of the present invention;
- Figure 7b illustrates first swirl promoting means as may be used in the embodiment shown in Figure 7a;
- Figure 8 illustrates gaseous flow impact blades as may be used in embodiments of the present invention;
- Figure 9 provides representative test results pertaining to the NH₃ uniformity index and the formation of solid deposits in various embodiments of the present invention; and
- Figure 10 provides representative test results pertaining to the formation of solid deposits in various embodiments of the present invention..

Throughout the figures, like reference numerals have been used to refer to like elements.

### Description of Embodiments

Throughout the description of the figures, terms such as "above" and "below" are used to denote relative positions of elements of the system in the orientation in which they are depicted in the figures. The use of these terms is not meant to limit the invention to arrangements having their upside and downside oriented in this way when in use.

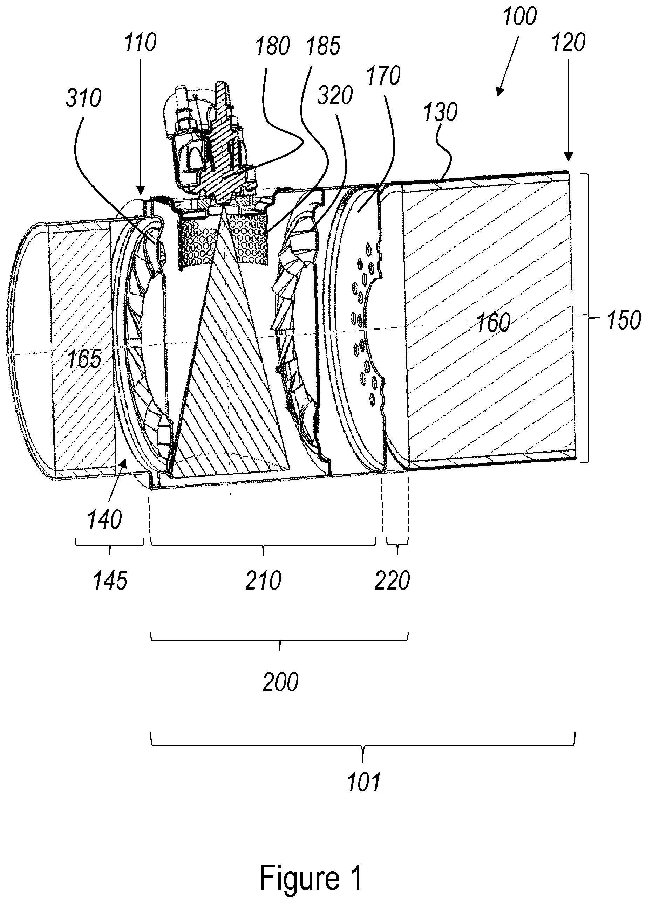

Figure 1 presents a cross section of a system for mixing a liquid spray into a gaseous flow according to a first embodiment of the present invention.

The system comprises a main body **100** defining an interior **101,** the main body interior extending from a first end **110** to a second end **120.** The skilled person will appreciate that the main body **100** has been given a certain length for the purpose of keeping the figure clear, the second end **120** may in reality be at a shorter or greater distance from the first end **110.** The main body **100** defines a circumferential wall **130** extending between the first end and the second end; i.e., the main body interior has the nature of hollow tube. In the illustrated case, the first end **110** defines an inlet opening **140** (in a variant, not illustrated, the circumferential wall **130** defines an inlet opening). The main body **100** also defines an outlet **150.**

An inlet arrangement is disposed at the inlet opening **140.** The inlet arrangement defines an inlet channel **145** leading to the interior **101** of the main body **100.** Through this inlet channel **145,** the gaseous flow that is to be mixed with the liquid spray enters the system. In the illustrated case, an optional pre-treatment substrate **165** (e.g. a Diesel Oxidation Catalyst or a Diesel particle filter) is present in a part of the inlet channel **145.**

A reaction zone **160** is disposed within the interior **101** of the main body **100** between the inlet opening **140** and the outlet **150.** The reaction zone **160** is spaced from the first end **110** to define a mixing region **200** within the main body interior **101.** This mixing region **200** is where the mixing of the liquid spray and the gaseous flow will take place, before the duly mixed aerosol enters the reaction zone **160.**

A restrictor arrangement **170** is disposed within the interior **101** of the main body **100** between the first end **110** and the reaction zone **160.** The restrictor arrangement **170** may be a transverse plate provided with one or more openings. In the illustrated case, the restrictor arrangement **170** is a transverse plate provided with a circular central opening and a plurality of smaller openings arranged around the central opening. The opening or pattern of openings leave the ring-shaped radially outer portion of the plate in place to block the gaseous flow from passing the restrictor arrangement **170** along the edge of the main body interior **170.** Other shapes of the restrictor arrangement **170** may be used to obtain the same or substantially the same effect, such as (without limitation) a plurality of inwardly directed peripheral teeth (not illustrated).

The restrictor arrangement **170** separates the mixing region **200** into a first chamber **210** and a second chamber **220,** whereby the restrictor arrangement defines a restricted passageway between the chambers. The first chamber comprises: a first swirl promoting means **310,** a dosing arrangement **180,** and a second swirl promoting means **320.**

The dosing arrangement **180** is configured to receive an injector to spray reactant (e.g. an aqueous urea solution) into the gas (e.g. exhaust gas of an internal combustion engine) so that the reactant mixes with the gas in the first chamber **210.** In the illustrated case, the system further comprises a spray protector system **185,** which may be formed as a cylindrical grate arranged around the injection zone.

The first swirl promoting means **310** is arranged between the inlet opening and the dosing arrangement. As a result, the gaseous flow entering the main body interior **101** is forced into a swirling motion before receiving the liquid spray. The second swirl promoting means **320** is arranged between the dosing arrangement **180** and the restrictor arrangement **170,** such that a gaseous flow passing through the second swirl promoting means **320** is swirled around (whereby the droplets are forced radially outwards as a result of the centrifugal force) before entering the restricted passageway and passing to the second chamber **200.**

The first swirl promoting means **310** and/or the second swirl promoting means **320** may comprise a baffle plate defining a plurality of scoops, pipes, louvers, or other direction adjusting members. Without loss of generality, the first swirl promoting means **310** and second swirl promoting means **320** of Figure 1 are both formed as baffle plates defining a plurality of louvers. Preferably, a combined open area of the plurality of openings defined by the baffle plate is at least as large as a transverse area of the restricted passageway. Without loss of generality, the first swirl promoting means **310** and second swirl promoting means **320** of Figure 1 are both arranged in a plane perpendicular to the axis of the main body **100,** but the skilled person will appreciate that a similar effect may be obtained by means of elements placed at an angle.

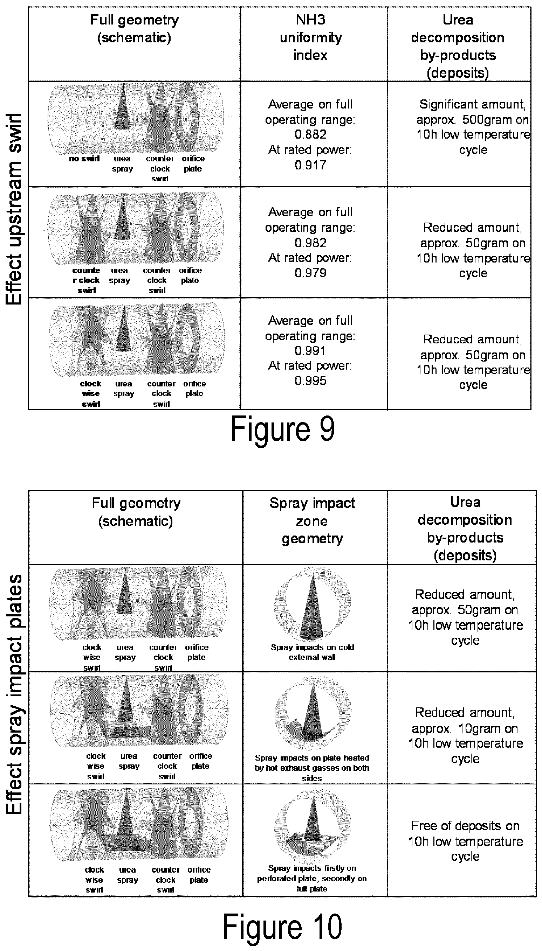

A system of the type illustrated in Figure 1, implemented for use as an SCR system for the treatment of exhaust, has been shown to result in a better mixing of injected urea (urea is injected as an ammonia precursor). Representative test results are summarized in the table of Figure 9. At full operating range, the measured NH₃ uniformity index in a system with a first swirl promoting means **310** and a second swirl promoting means **320** arranged to impose the same swirling direction was 0.982, versus 0.882 in a system lacking the first swirl promoting means **310.** At rated power, the measured NH₃ uniformity index in a system with a first swirl promoting means **310** and a second swirl promoting means **320** arranged to impose the same swirling direction was 0.979, versus 0.917 in a system lacking the first swirl promoting means **310.**

Moreover, while the system lacking the first swirl promoting means **310** tended to present a build-up of significant deposits of urea decomposition by-products on the cold circumferential wall **130** (approximately 500g in a 10h low-temperature cycle), this was greatly reduced in the system with a first swirl promoting means **310** and a second swirl promoting means **320** arranged to impose the same swirling direction (approximately 50g in a 10h low-temperature cycle).

Preferably, the first swirl promoting means **310** and the second swirl promoting means **320** are arranged to promote swirling in a first angular direction and a second angular direction respectively, the first angular direction and the second angular direction being mutually opposed. Such an arrangement has been shown to result in even better mixing of injected urea in a system otherwise identical to the one described above, as also shown in the table of Figure 9. At full operating range, the measured NH₃ uniformity index in a system with opposing swirl directions of the first swirl promoting means **310** and the second swirl promoting means **320** was 0.991, versus 0.982 in a system with identical swirl directions. At rated power, the measured NH₃ uniformity index in a system with opposing swirl directions of the first swirl promoting means **310** and the second swirl promoting means **320** was 0.995, versus 0.979 in a system with identical swirl directions. The observed degree of deposit formation was substantially the same for the system with opposing swirl directions and the system with identical swirl directions.

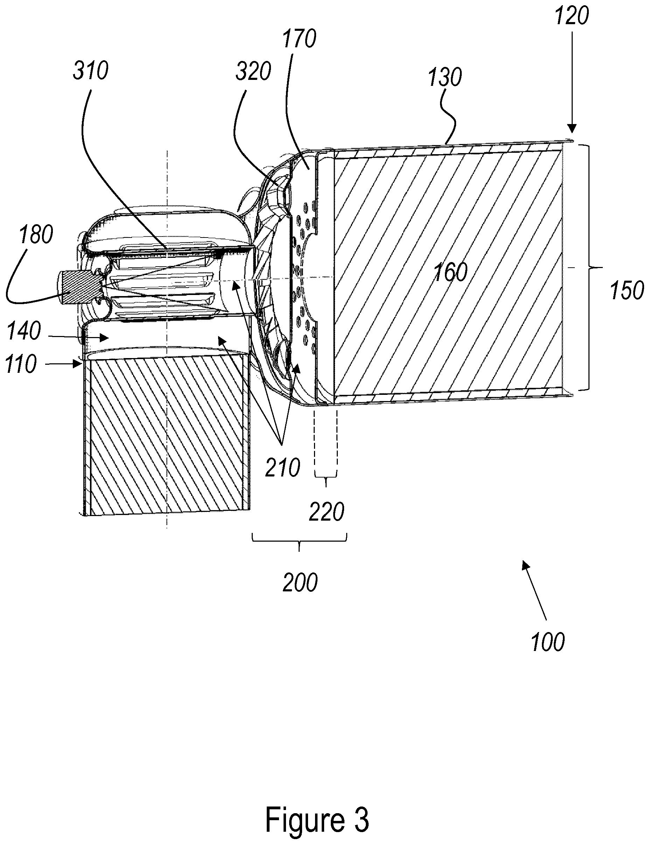

In the system illustrated in Figure 1, the main body interior **101** extends along a longitudinal axis from the first end **110** to the second end **120.** The dosing arrangement **180** is configured so that an injection axis of any injector mounted to the dosing arrangement **180** is not coaxial with the longitudinal axis of the main body **100.** However, the inventors have found that such a linear arrangement is not strictly necessary to obtain the advantages of the present invention, as will be explained in more detail below with reference to Figure 3.

Furthermore, in the system illustrated in Figure 1, the inlet arrangement is configured to orient the inlet channel **145** in the direction of the axis of the main body **100.** at an angle to the main body **100** to promote swirling of the gas. However, the inventors have found that such a linear arrangement is not strictly necessary to obtain the advantages of the present invention. In embodiments of the system according to the present invention, the inlet arrangement may be configured to orient the inlet channel **145** at an angle to the main body **100,** and preferably at an offset to the axis of the main body **100,** to promote swirling of the gas (not illustrated).

Embodiments of the system according to the present invention may further comprise a directional flow expansion device disposed in the second chamber **220** of the mixing region **200** (not illustrated). This directional flow expansion device may include a baffle plate defining a plurality of openings. Further details of a flow expansion device may be found in international patent application publication no. WO 2015/130789 A1 in the name of Donaldson Company, Inc., the content of which is incorporated by this reference for this purpose.

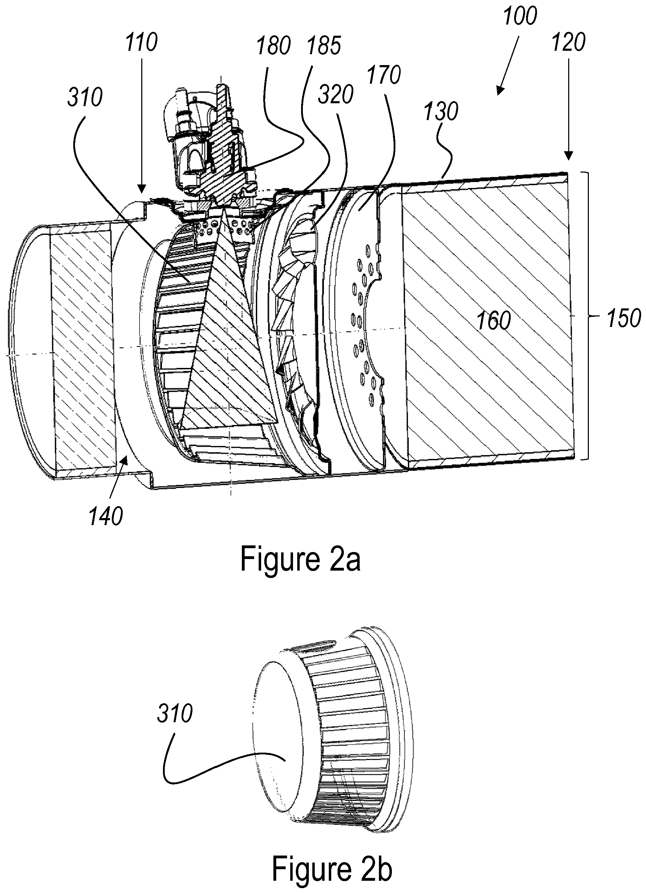

Figure 2a presents a cross section of a system for mixing a liquid spray into a gaseous flow according to a second embodiment of the present invention. For reasons of conciseness, only the substantive differences with the first embodiment will be described in detail.

In the illustrated case, the first swirl promoting means **310** comprises a tube defining a plurality of louvers to adjust the direction of the incoming gaseous flow so as to create a swirl. The tube may likewise define a plurality of scoops or other direction adjusting members. For completeness, it is noted that the second swirl promoting means **320** may be conceived in a similar way (not illustrated).

As noted above, while the first swirl promoting means **310** is said to be arranged between the inlet opening and the dosing arrangement, its shape may in fact axially extend from a point upstream of the dosing arrangement (as referenced to the direction of the gaseous flow), to a point directly beneath or even somewhat downstream of the dosing arrangement **180,** as is the case in the embodiment of Figure 2. Accordinlgy, mixing and injection occur in the same axial region, while still meeting the requirement of producing a swirling motion in the gaseous flow at or prior to the point at which said gaseous flow first receives the liquid spray.

By aiming the injector towards the louvered tube, which is constantly heated by the incoming gaseous flow, the creation of solid deposits (which could occur when the liquid spray hits a cold surface) can be avoided.

Figure 2b illustrates the first swirl promoting means **310** as may be used in the embodiment shown in Figure 2a.

Figure 3 presents a cross section of a system for mixing a liquid spray into a gaseous flow according to a third embodiment of the present invention. For reasons of conciseness, only the substantive differences with the first embodiment will be described in detail.

In the illustrated case, the main body **100** is divided into a first main part and a second main part. The first main part comprises the first swirl promoting means **310** and the dosing arrangement **180.** The second main part comprising the second swirl promoting means **320** and the restrictor arrangement **170.** The longitudinal axis of the second main part is arranged at an angle relative to the longitudinal axis of the first main part. The dosing arrangement **180** may be configured so that an injection axis of any injector mounted to the dosing arrangement **180** is substantially parallel to the longitudinal axis of the second main part.

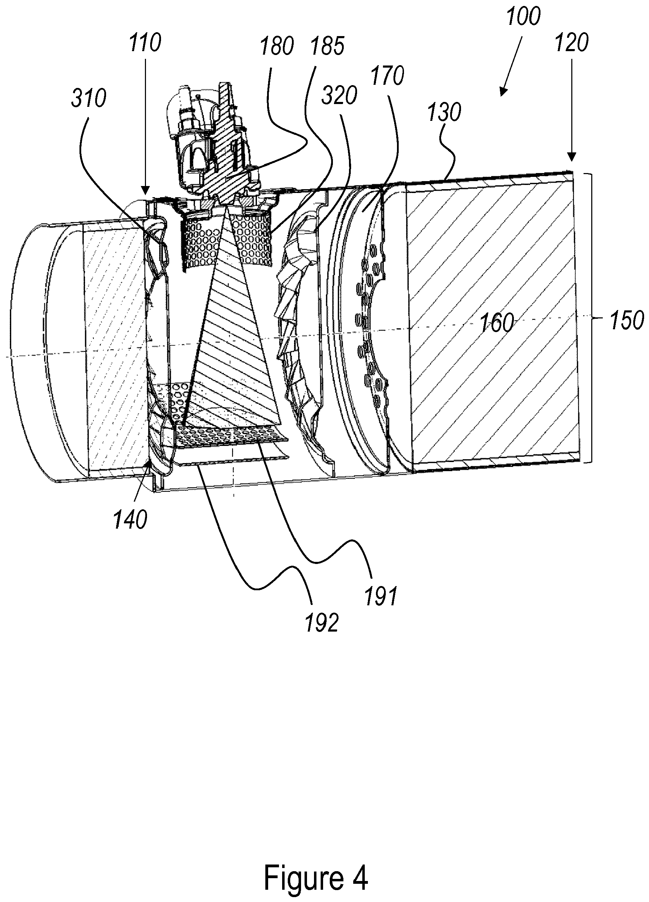

Figure 4 presents a cross section of a system for mixing a liquid spray into a gaseous flow provided with metal surfaces arranged in a plane intersecting the injection axis, as may be used in embodiments of the present invention.

The presence of a sheet metal plate in the path of the liquid spray, heated by a gaseous flow surrounding it, has been shown to greatly reduce the build-up of deposits of urea decomposition by-products in an SCR-system according to an embodiment of the present invention. Representative test data are shown in the table of Figure 10. While a 10h low-temperature cycle results in approximately 50g of deposits on the outer wall **130** in the absence of a separate, heated sheet metal surface, the presence of such a sheet metal surface reduces this amount to approximately 10g.

In the illustrated case, the system comprises, without loss of generality, two sheet metal surfaces **191, 192** arranged in the first chamber **210** so as to be substantially surrounded by a gaseous flow entering through the inlet opening **140.** The dosing arrangement **180** is configured so that an injection axis of any injector mounted to the dosing arrangement intersects the sheet metal surfaces **191, 192.** This arrangement ensures that the plates on which the liquid spray impinges constantly receive heat from the incoming gaseous flow, avoiding the risk that solid deposits form there. In the illustrated case, the upper plate **191** is a grate or a perforated plate, while the lower plate **192** is a solid plate.

The combination of a perforated plate **191** and a solid plate **192,** as illustrated in Figure 4, has been shown to further reduce the build-up of deposits of urea decomposition by-products in an SCR-system according to an embodiment of the present invention, as also shown in the table of Figure 10. In a 10h low-temperature cycle, no noticeable deposits were formed.

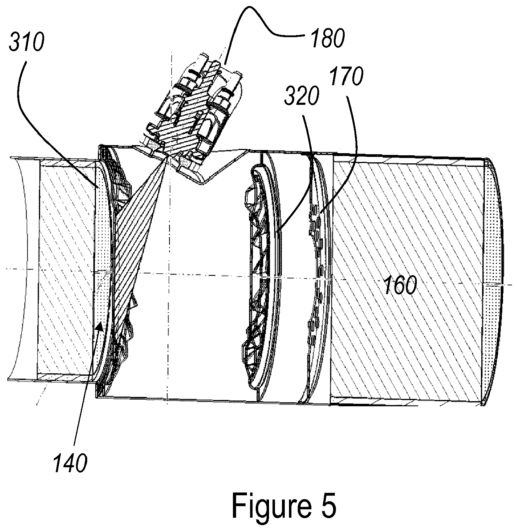

Figure 5 presents a cross section of a system for mixing a liquid spray into a gaseous flow provided with an injector having an injection axis intersecting with the first swirl promoting means, as may be used in embodiments of the present invention. In this case, the first swirl promoting means **310** is a swirl baffle with louvers as already described in the context of Figure 1. By aiming the injector towards the swirl baffle, which is constantly heated by the incoming gaseous flow, the creation of solid deposits can be avoided while removing the need for the separate sheet metal plates.

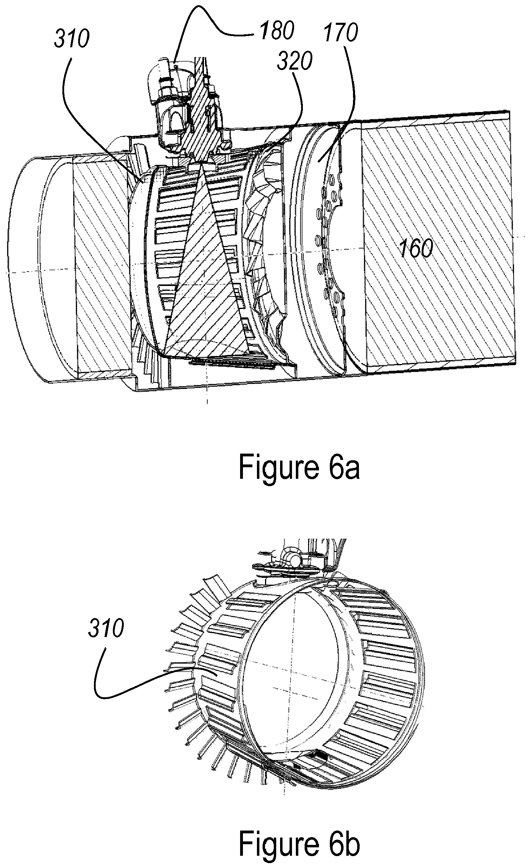

Figure 6a presents a cross section of a system for mixing a liquid spray into a gaseous flow according to a fourth embodiment of the present invention. For reasons of conciseness, only the substantive differences with the first embodiment will be described in detail.

In this case, the first swirl promoting means **310** is a tube with louvers on the upstream side for creating swirl, and slits in the zone directly below the dosing arrangement **180** for allowing the liquid spray to enter the gaseous flow. By aiming the injector towards the slitted tube, which is constantly heated by the incoming gaseous flow, the creation of solid deposits can be avoided while removing the need for the separate sheet metal plates.

Figure 6b illustrates first swirl promoting means as may be used in the embodiment shown in Figure 6a in more detail.

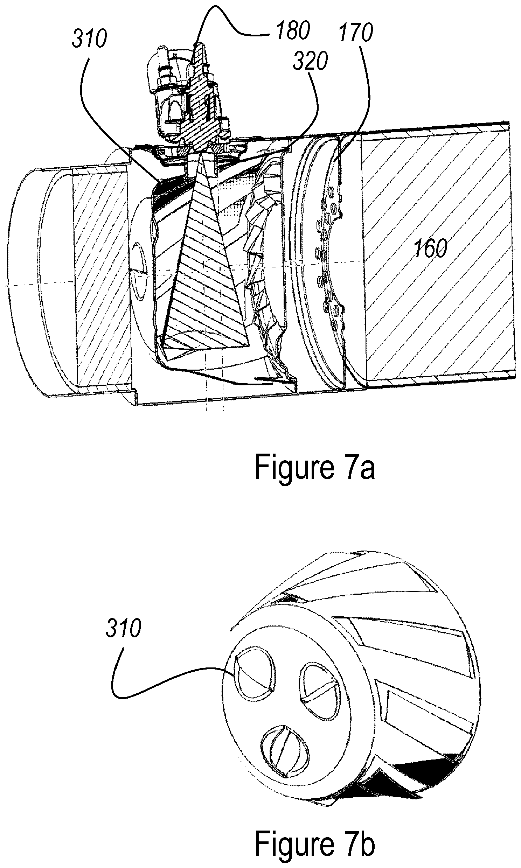

Figure 7a presents a cross section of a system for mixing a liquid spray into a gaseous flow according to a fifth embodiment of the present invention. For reasons of conciseness, only the substantive differences with the first embodiment will be described in detail.

In this case, the first swirl promoting means **310** is a tube with scoops on the upstream side for creating swirl, and slanted slits in the zone directly below the dosing arrangement **180** that contribute the creation of swirl and allow the liquid spray to enter the gaseous flow. By aiming the injector towards the slitted tube, which is constantly heated by the incoming gaseous flow, the creation of solid deposits can be avoided while removing the need for the separate sheet metal plates.

Figure 7b illustrates first swirl promoting means as may be used in the embodiment shown in Figure 7a in more detail.

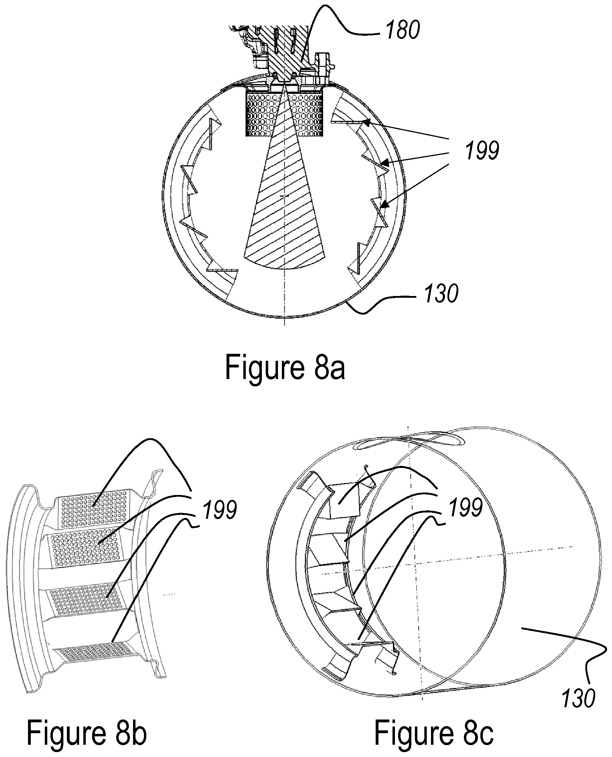

Figures 8a-c illustrate gaseous flow impact blades as may be used in embodiments of the present invention.

In the illustrated case, the circumferential wall **130** is provided with a plurality of stepped impact blades **199,** arranged in the axial region that includes the dosing arrangement **180** (see in particular the cross-section in Figure 8a). As these impact blades **199** are provided downstream of the first swirl promoting means **310,** they are approached by a gaseous flow that is already in a swirling motion. Due to their placement, the impact blades **199** tend to interrupt the flow, causing additional flow turbulence (and hence, improved mixing), pushing the flow back towards central axis (by counteracting the centrifugal effect of the swirl), increasing the heat transfer from the (hot) gas to the blades **199,** and reducing any undesired local cooling of the circumferential **130** due to spray impaction. The individual impact blades **199** may be perforated, as shown in Figure 8b. A part combining several impact blades **199** may be attached to the sides of the circumferential wall **130,** as shown in Figure 8c.

The present invention also pertains to an exhaust treatment device for treating exhaust comprising the system for mixing a liquid spray into a gaseous flow according to any of the preceding claims, wherein an aftertreatment substrate (e.g. a Diesel particle filter, Selective Catalytic Reduction on Filter, or regular Selective Catalytic Reduction substrate) is disposed in the reaction zone **160,** and wherein the inlet arrangement is adapted to receive an exhaust flow of an internal combustion engine. The liquid spray may consist of a urea solution (e.g. a eutectic urea/water solution, such as the ones commercially available under the names AdBlue and DEF).

The present invention also pertains to a motor vehicle comprising the exhaust treatment device described above, arranged for the purpose of treating the exhaust produced by the vehicle's internal combustion engine.

While the invention has been described hereinabove with reference to particular embodiments, this was done to clarify and not to limit the invention, the scope of which is to be determined by reference to the accompanying claims. In particular, variations and elements which have only been described in the context of a particular embodiment, may be combined with the features of other embodiments to obtain the same technical effects.

## Claims

1. A system for mixing a liquid spray into a gaseous flow, the system comprising:
- a main body (100) defining an interior (101), the main body interior extending from a first end (110) to a second end (120), the main body (100) defining a circumferential wall (130) extending between the first end and the second end, the circumferential wall (130) or the first (110) end defining an inlet opening (140), the main body (100) also defining an outlet (150);
- an inlet arrangement disposed at the inlet opening (140), the inlet arrangement defining an inlet channel (145) leading to the interior (101) of the main body (100);
- a reaction zone (160) disposed within the interior (101) of the main body (100) between the inlet opening (140) and the outlet (150), the reaction zone (160) being spaced from the first end (110) to define a mixing region (200) within the main body interior (101);
- a restrictor arrangement (170) disposed within the interior (101) of the main body (100) between the first end (110) and the reaction zone (160), the restrictor arrangement (170) separating the mixing region (200) into a first chamber (210) and a second chamber (220), the restrictor arrangement defining a restricted passageway between the first and second chambers;
wherein the first chamber comprises:
- a dosing arrangement (180) configured to receive an injector to spray reactant into the gaseous flow so that the reactant mixes with the gaseous flow in the first chamber (210);
- a first swirl promoting means (310) arranged between the inlet opening and the dosing arrangement; and
- a second swirl promoting means (320) arranged between the dosing arrangement (180) and the restrictor arrangement (170), such that a gaseous flow passing through said second swirl promoting means (320) is swirled around before entering the restricted passageway and passing to the second chamber (200); and
wherein said dosing arrangement is adapted for receiving an injector such that an injection axis of said injector is directed to the first swirl promoting means (310).

2. The system according to claim 1, wherein the first swirl promoting means (310) and the second swirl promoting means (320) are arranged to promote swirling in a first angular direction and a second angular direction respectively, said first angular direction and said second angular direction being mutually opposed.

3. The system according to any of the preceding claims, wherein the inlet arrangement is configured to orient the inlet channel (145) at an angle to the main body (100) to promote swirling of the gaseous flow.

4. The system according to any of the preceding claims, wherein the first swirl promoting means (310) comprises a baffle plate defining a plurality of scoops, louvers, or other direction adjusting members.

5. The system according to any of the preceding claims, wherein the second swirl promoting means (320) comprises a baffle plate defining a plurality of scoops, louvers, or other direction adjusting members.

6. The system according to claim 4 or 5, wherein a combined open area of the plurality of openings defined by the baffle plate is at least as large as a transverse area of the restricted passageway.

7. A system according to any of the previous claims, wherein said first swirl promoting means has a shape that axially extends from a point upstream of the dosing arrangement (as referenced to the direction of the gaseous flow), to a point directly beneath or even somewhat downstream of the dosing arrangement.

8. The system according claim 7, wherein the first swirl promoting means (310) comprises a tube defining a plurality of scoops, louvers or other direction adjusting members.

9. The system according to any of the preceding claims, further comprising a spray protector system (185).

10. The system according to any of the preceding claims, further comprising an injector having an injection axis aiming at said first swirl promoting means.

11. An exhaust treatment device for treating exhaust comprising the system for mixing a liquid spray into a gaseous flow according to any of the preceding claims, wherein an aftertreatment substrate is disposed in said reaction zone (160), and wherein said inlet arrangement is adapted to receive an exhaust flow of an internal combustion engine.

12. A motor vehicle comprising the exhaust treatment device according to claim 11.

13. A diesel-powered machine comprising the exhaust treatment device according to claim 11.
